# EUROPÄISCHE PATENTSCHRIFT

(11) **EP 0 545 046 B1**
(45) Veröffentlichungstag und Bekanntmachung des Hinweises auf die Patenterteilung: **20.11.1996**
(21) Anmeldenummer: 92117593.1
(22) Anmeldetag: 15.10.1992
(51) Int. Cl.: B60D 5/00, B62D 47/02

(54) **Drehgelenk mit einer Knickeinrichtung in Gelenkomnibussen**
Anti-jack-knifing device for connection in articulated bus
Connexion avec dispositif antiflambage pour autobus articulé

(30) Priorität: 04.12.1991 DE 4139992
(43) Veröffentlichungstag der Anmeldung: 09.06.1993
(73) Patentinhaber: MAN Nutzfahrzeuge Aktiengesellschaft, 80976 München (DE)
(72) Erfinder: Uttenthaler, Josef, Dipl.-Ing. (FH), W-8068 Hettenshausen (DE)

(56) Entgegenhaltungen:
- EP-A- 0 340 760
- EP-A- 0 392 177
- EP-A- 0 446 614
- EP-A- 0 475 339
- DE-A- 3 904 756

## Beschreibung

Die Erfindung betrifft ein Drehgelenk mit einer Knickschutzvorrichtung in Gelenkomnibussen, vorzugsweise Niederflur-Gelenkomnibussen, mit einem Vorderwagenausleger, einem Nachläuferausleger, einem Drehkranz mit Außen- und Innenring und zwei am Vorderwagengerippe und am Außenring des Drehkranzes angreifenden, als Dämpfer wirkenden Hydraulikzylindern.

Bekannte Drehgelenke mit einer Knickschutzvorrichtung (EP-A-0 392 177) weisen eine beträchtliche Höhe auf (Fahrbahn bis Oberkante Drehteller etwa 540 mm und mehr). Diese Höhe ergibt sich aus der Bodenfreiheit und der Addition der Einzelhöhen von Bauelementen, wie Faltenbalgbefestigungsbügel, Auslegerträger von Vorderwagen bzw. Nachläufer, Drehkranz, Knickschutzzylinder und Portal mit Drehteller.

Der Erfindung liegt nun die Aufgabe zugrunde, die Gesamthöhe eines Drehgelenkes wesentlich zu reduzieren, um vor allem den Erfordernissen bei Niederflurbussen gerecht zu werden.

Diese Aufgabe wird erfindungsgemäß durch die Merkmale des Anspruches 1 gelöst.

Solcherart ist es möglich, die Gesamthöhe des Drehgelenkes wesentlich zu reduzieren, insbesondere durch die Maßnahme, daß nunmehr nicht alle Teile übereinander angeordnet sind, vielmehr wichtige Teile in einer einzigen Höhenebene. Die Hydraulikzylinder liegen mit ihren Zylinderteilen außerhalb des Bereiches der Auslegerarme des Vorderwagenauslegers. Lediglich mit ihren Kolbenstangen durchgreifen die Hydraulikzylinder mittig die zwischen den übereinanderliegenden Gabelzungen vorgesehenen Ausnehmungen der Auslegerarme.

Vorteilhafte Ausgestaltungen und Weiterbildungen der erfindungsgemäßen Lösung sind in den Unteransprüchen angegeben.

Nachstehend ist die erfindungsgemäße Lösung anhand eines in der Zeichnung dargestellten Ausführungsbeispieles noch näher erläutert.

In der Zeichnung zeigen:
- Fig.1: ein in der Draufsicht dargestelltes Drehgelenk eines Gelenkomnibusses, wobei aus Gründen der Übersichtlichtkeit auf die Darstellung der identischen spiegelbildlichen Hälfte des Drehgelenkes verzichtet ist, und
- Fig. 2: ein in Seitenansicht partiell im Längsschnitt dargestelltes Drehgelenk.

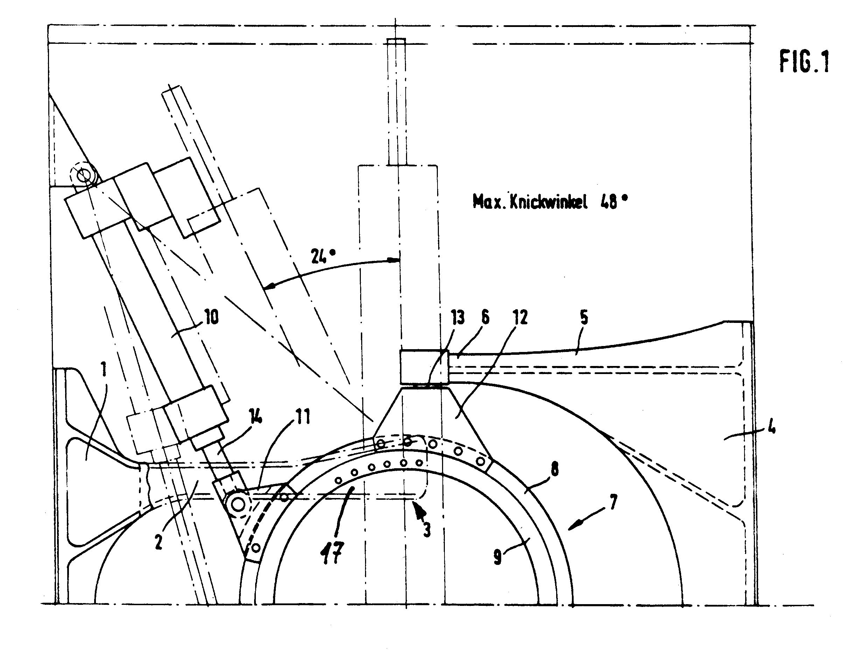

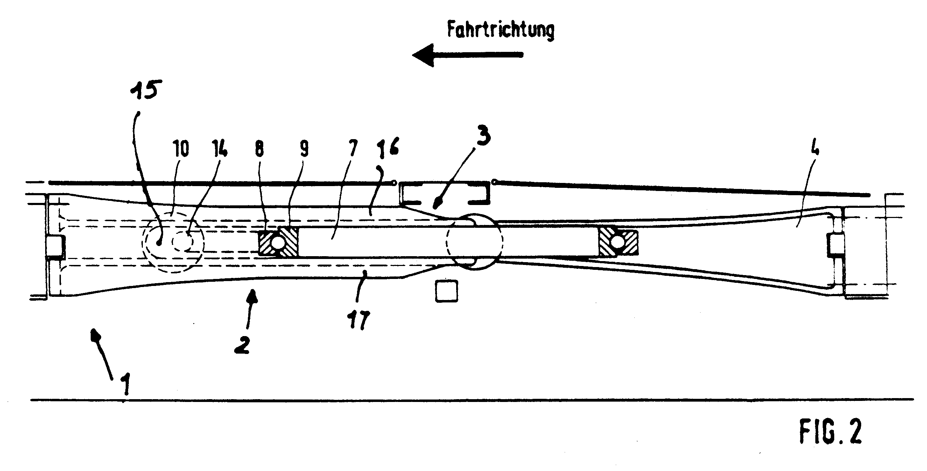

Die Figuren 1 und 2 zeigen einen am Vorderwagengerippe eines Gelenkomnibusses angebrachten Vorderwagenausleger 1, der zwei in Richtung eines Drehgelenkes weisende Auslegerarme 2 aufweist. In den Fig. 1 und 2 ist jeweils nur ein Auslegerarm 2 dargestellt. Ein spiegelbildlich zu diesem angeordneter zweiter Auslegerarm ist aus Gründen der Übersichtlichkeit nicht gezeigt. In der hier gezeigten Version ist der Vor-derwagenausleger 1 als Gußteil ausgebildet.

Ein in Fig. 2 dargestellter Auslegerarm 2 ist an seinem Armende 3 gabelförmig ausgebildet, dergestalt, daß zwei, jeweils ein Armende 3 bildende Gabelzungen 16, 17 übereinander angeordnet sind. Die Gabelzungen 16, 17 sind zueinander beabstandet angeordnet und begrenzen eine sich zwischen ihnen längserstreckende Ausnehmung 15. Die Ausnehmung 15 wird bereichsweise von einem dem Drehgelenk zugehörigen Drehkranz 7 mit seinem Drehkranz-Außenring 8 und seinem Drehkranz-Innenring 9 durchgriffen. Die Höhe der Ausnehmung 15 ist auf die Bauhöhe des Innenringes 9 abgestimmt, dergestalt, daß dieser problemlos in die Ausnehmung 15 einführbar ist. Die Gabelzungen 16, 17 sind fest mit dem Innenring 9, beispielsweise mittels Verschraubungen oder dergleichen verbunden.

Gemäß Fig. 1 sind am Vorderwagengerippe zwei Hydraulikzylinder 10 (hier nur einer gezeigt) schwenkbar befestigt. Die Hydraulikzylinder 10 sind in ihrer Höhenersteckung in der Ebene des Vorderwagenauslegers 1 angeordnet. Die Kolbenstangen 14 der Hydraulikzylinder 10 durchgreifen die Auslegerarme 2 mittig im Bereich ihrer Ausnehmung 15 (Fig. 2). Die Kolbenstangen 14 sind mittels Flansche 11 fest, aber schwenkbar mit dem Drehkranz-Außenring 8 verbunden.

Ein dem Nachläufer des Gelenkomnibusses zugehöriger Nachläuferausleger 4 ist in seiner Höhenerstreckung in etwa in der Ebene des Drehkranzes 7 angeordnet. Der Nachläuferausleger 4 weist zwei Auslegerarme 5 (in den Fig. 1 und 2 ist nur ein Nachläufer-Auslegerarm 5 gezeigt) auf. Die Armenden 6 der Nachläufer-Auslegerarme 5 weisen drehbar gelagerte Zapfen 13 auf, die über Flansche 12 fest mit dem Drehkranz-Außenring 8 des Drehkranzes 7 verbunden sind.

### Bezugszeichenliste

- 1: Vorderwagenausleger
- 2: Auslegerarme
- 3: Armenden
- 4: Nachläuferausleger
- 5: Nachläufer-Auslegerarme
- 6: Armenden
- 7: Drehkranz
- 8: Drehkranz-Außenring
- 9: Drehkranz-Innenring
- 10: Hydraulikzylinder
- 11: Flansch
- 12: Flansch
- 13: Zapfen
- 14: Hydraulikzylinder-Kolbenstange
- 15: Ausnehmung
- 16: Gabelzunge
- 17: Gabelzunge

## Patentansprüche

1. Drehgelenk mit einer Knickschutzvorrichtung in Gelenkomnibussen, vorzugsweise Niederflur-Gelenkomnibussen, mit einem Vorderwagenausleger, einem Nachläuferausleger, einem Drehkranz mit Außen- und Innenring und zwei am Vorderwagengerippe und am Außenring des Drehkranzes angreifenden, als Dämpfer wirkenden Hydraulikzylindern, dadurch gekennzeichnet,
- daß der Vorderwagenausleger (1) an den dem Drehkranz (7) zugewandten Armenden (3) seiner Auslegerarme (2) durch eine sich längserstreckende Ausnehmung (15) gabelförmig ausgebildet ist, derart, daß die Gabelzungen (16, 17) übereinander angeordnet sind,
- daß der Drehkranz (7) mit seinem Innenring (9) und seinem Außenring (8) bereichsweise in die Ausnehmung (15) hineinragend, die Gabelzungen (16, 17) durchgreift,
- wobei der Innenring (9) mit den Gabelzungen (16, 17) fest verbunden ist und
- daß die Hydraulikzylinder (10) in ihrer Höhenerstreckung in der Ebene des Vorderwagenauslegers (1) angeordnet sind,
- wobei die Hydraulikzylinder-Kolbenstangen (14), die Auslegerarme (2) durch die Ausnehmung (15) mittig durchgreifend, fest, aber schwenkbar mit dem Drehkranz-Außenring (8) verbunden sind.

2. Drehgelenk nach Anspruch 1, dadurch gekennzeichnet, daß die Hydraulikzylinder-Kolbenstangen (14) an ihren Enden schwenkbar über Flansche (11) mit dem Drehkranz-Außenring (8) verbunden sind.

3. Drehgelenk nach Anspruch 1 oder 2, dadurch gekennzeichnet, daß der Vorderwagenausleger (1) als Gußteil ausgebildet sind.

4. Drehgelenk nach den Ansprüchen 1 bis 3, dadurch gekennzeichnet, daß der Nachläuferausleger (4) in Höhenerstreckung in der Ebene des Drehkranzes (7) angeordnet ist.

## Claims

1. Swivel joint with an anti-jackknife device in articulated buses, preferably in low-floor articulated buses, with a forebody boom, an afterbody boom, a turntable with an outer ring and an inner ring and two hydraulic cylinders acting as dampers on the forebody framework and on the outer ring of the turntable, characterised in that
• the forebody boom (1), at the ends (3) of its arms (2), which ends (3) face said turntable (7), is designed as a fork by means of a cutout (15) in longitudinal direction so that the fork prongs (16, 17) are arranged above each other,
• a section of the inner ring (9) and its outer ring (8) of the turntable reaches into the cutout (15) and passes between the fork arms (16, 17)
• the inner ring (9) thereby being firmly connected with the fork prongs (16, 17) and
• that the hydraulic cylinders (10) in their vertical extension are arranged in the plane of the forebody boom (1),
• the hydraulic-cylinder piston rods (14) thereby penetrating the centre of the arms (2) through the cutout (15) and being firmly but slewably connected with the turntable outer ring (8).

2. Swivel joint according to Claim 1, characterised in that the ends of the piston rods (14) of the hydraulic cylinders are slewably connected with the turntable outer ring (8) via flanges (11).

3. Swivel joint according to Claim 1 or 2, characterised in that the forebody boom (1) is designed as a cast part.

4. Swivel joint according to Claims 1 to 3, characterised in that the afterbody boom (4) in its vertical extension is arranged in the plane of the turntable (7).

## Revendications

1. Articulation tournante avec un dispositif de protection en virage dans des autobus articulés, de préférence des autobus à plancher surbaissé, avec un avant-bras de voiture de devant, un avant-bras de remorque, une couronne tournante avec une bague intérieure et avec une bague extérieure et deux vérins hydrauliques venant en prise sur le châssis de la voiture de devant et sur la bague extérieure de la couronne tournante, et agissant comme amortisseurs, articulation tournante,
caractérisée en ce que
- l'avant-bras de la voiture de devant (1) est constitué aux extrémités (3) de ses bras (2) orientées vers la couronne tournante (7), par un évidement (15), en forme de fourche, qui s'étend en longueur, d'une manière telle que les languettes de fourche (16, 17) soient disposées l'une au-dessus de l'autre,
- la couronné tournante (7) vient en prise par sa bague intérieure (9) et sa bague extérieure (8), en pénétrant localement dans l'évidement (15), avec les languettes de fourche (16, 17),
- la bague intérieure (9) étant reliée de façon solidaire aux languettes de fourche (16, 17) et,
- les vérins hydrauliques (10) sont disposés dans leur étendue en hauteur dans le plan de l'avant-bras (1) de la voiture de devant,
- les tiges des pistons (14) des vérins hydrauliques, et les bras (2), qui viennent en prise au milieu à travers l'évidement (15), étant reliés de façon solidaire, mais tout en pouvant pivoter, à la bague extérieure (8) de la couronne tournante.

2. Articulation tournante selon la revendication 1,
caractérisée en ce que
les tiges des pistons (14) des vérins hydrauliques sont reliées à leurs extrémités de façon à pouvoir pivoter, au moyen des brides (11) à la bague extérieure (8) de la couronne dentée.

3. Articulation tournante selon la revendication 1 ou 2,
caractérisée en ce que
l'avant-bras (1) de la voiture de devant est constitué par une pièce venue de fonderie.

4. Articulation tournante selon les revendications 1 à 3,
caractérisée en ce que
l'avant-bras (4) de la remorque est disposé dans son étendue en hauteur dans le plan de la couronne tournante (7).
